# EUROPÄISCHE PATENTSCHRIFT

(11) **EP 1 309 161 B1**
(45) Veröffentlichungstag und Bekanntmachung des Hinweises auf die Patenterteilung: **13.08.2014**
(21) Anmeldenummer: 02024225.1
(22) Anmeldetag: 31.10.2002
(51) Int. Cl.: H04M 3/42, H04W 84/16

(54) **Telefonanlage**
Telephone installation
Installation téléphonique

(30) Priorität: 06.11.2001 DE 10154418
(43) Veröffentlichungstag der Anmeldung: 07.05.2003
(73) Patentinhaber: Grundig Multimedia AG, 6362 Stansstad (CH)
(72) Erfinder: Thoma, Heinrich, 91599 Nürnberg (DE)
(74) Vertreter: Louis Pöhlau Lohrentz

(56) Entgegenhaltungen:
- EP-A- 0 766 427
- EP-A- 1 022 916
- WO-A-00/78017
- US-A- 5 890 064

## Beschreibung

Die Erfindung betrifft eine Telefonanlage, welche eine Vermittlungsstelle, mehrere mit der Vermittlungsstelle verbundene Teilnehmer und eine oder mehrere mit der Vermittlungsstelle verbundene Amtsleitungen aufweist.

Heutige Haushalte weisen zunehmend Geräte auf, die eine Telefonverbindung benötigen. Zu diesen Geräten gehören beispielsweise Heimcomputer mit eingebautem Modem für einen Internetanschluss, Settop-Boxen mit einem integrierten Modem und Fernsehgeräte mit einem integrierten Modem.

Aus der EP-A2-0766427 ist ein integriertes Bürokommunikationssystem bekannt. Dieses Bürokommunikationssystem verwendet ein lokales Netzwerk zur Übertragung von Informationen zwischen zum Bürokommunikationssystem gehörenden Geräten. Weiterhin ist eine Netzwerkübergangseinrichtung zum Übertragen von Informationen zwischen dem lokalen Netzwerk und einem öffentlichen, zellenartigen Funknetz sowie eine Kleinleistungsbasisstationseinrichtung zum Anbieten einer Funkschnittstelle für Endgeräte, die in einem öffentlichen, zellenartigen Funknetzwerk betrieben werden, bekannt. Die Funkschnittstelle ist im Wesentlichen identisch mit derjenigen, welche durch eine herkömmliche Basisstation in öffentlichen, zellenartigen Funknetzwerk zur Verfügung gestellt wird. Im Weiteren ist die Netzwerkübergangseinrichtung des lokalen Netzwerks und die Kleinleistungsbasisstationseinrichtung derart eingerichtet, dass in dem Bereich des Bürokommunikationssystems eine Verbindung zwischen dem Endgerät und dem öffentlichen, zellenförmigen Funknetz über die Kleinleistungsbasisstationseinrichtung, das lokale Netzwerk und die Netzwerkübergangseinrichtung hergestellt wird.

Weiterhin befinden sich in vielen Haushalten Vermittlungsstellen, die an eine oder zwei Amtsleitungen angeschlossen und dazu vorgesehen sind, bei Bedarf die genannten Amtsleitungen jeweils mit einem von mehreren im Haus vorhandenen Teilnehmern zu verbinden.

Ist die einzige vorhandene Amtsleitung oder sind die beiden vorhandenen Amtsleitungen längere Zeit ständig belegt, beispielsweise dadurch, dass dem Haushalt angehörende Personen längere Zeit im Internet surfen, dann besteht für die weiteren an die Vermittlungsstelle angeschlossenen Teilnehmer keine Möglichkeit, eine Amtsverbindung aufzubauen.

Der Erfindung liegt die Aufgabe zugrunde, einen Weg aufzuzeigen, wie der vorstehend beschriebene Nachteil beseitigt werden kann.

Diese Aufgabe wird durch eine Telefonanlage mit den im Anspruch 1 angegebenen Merkmalen gelöst. Vorteilhafte Ausgestaltungen und Weiterbildungen der Erfindung sind in den abhängigen Ansprüchen angegeben. Die Vorteile der Erfindung bestehen insbesondere darin, dass den an die Vermittlungsstelle angeschlossenen Teilnehmern unter Verwendung eines oder mehrerer Handys eine oder mehrere zusätzliche Amtsverbindungen zur Verfügung gestellt werden können. Da Handys in heutigen Haushalten ohnehin bereits in großer Anzahl vorhanden sind, ist diese Lösung vergleichsweise preisgünstig realisierbar.

Die Verbindung zwischen den Teilnehmern und der Vermittlungsstelle kann sowohl drahtlos als auch drahtgebunden erfolgen. Auch die Verbindung zwischen der Vermittlungsstelle und dem bzw. den Handys bzw. deren Ladegeräten kann sowohl drahtlos als auch drahtgebunden erfolgen.

Liegt seitens eines der Teilnehmer ein Anforderungssignal für eine Amtsverbindung vor, dann prüft die Vermittlungsstelle zunächst, ob die gewünschte Amtsverbindung über eine der Amtsleitungen erfolgen kann. Ist dies nicht der Fall, dann prüft die Vermittlungsstelle, ob eine Amtsverbindung über ein Handy aufgebaut werden kann. Ist dies der Fall, dann übermittelt die Vermittlungsstelle dem jeweiligen Handy einen Steuerbefehl, aufgrund dessen das genannte Handy die Amtsverbindung aufbaut.

Gegebenenfalls kann vor dem Aufbau dieser Amtsverbindung - da eine Amtsverbindung über ein Handy im allgemeinen teurer ist als eine Amtsverbindung über eine Amtsleitung - eine Rückfrage beim anfragenden Teilnehmer vorgenommen werden, ob die Verbindung aufgebaut werden soll oder nicht. Die Verbindung wird nur dann aufgebaut, wenn der Teilnehmer ein entsprechendes Bestätigungssignal eingibt.

Über das Handy eingehende Anrufe werden über die Vermittlungsstelle an einen oder mehrere Teilnehmer signalisiert, die daraufhin ein optisches oder akustisches Meldesignal ausgeben. Welche der Teilnehmer eine Freigabe für eine Amtsverbindung über das Handy aufweisen, ist durch eine entsprechende Programmierung der Vermittlungsstelle eingebbar.

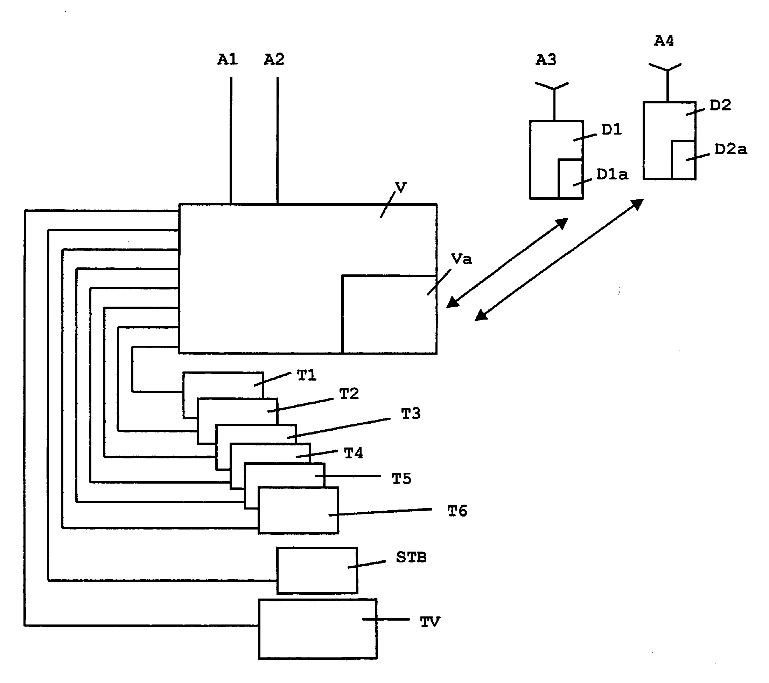

Weitere vorteilhafte Eigenschaften der Erfindung ergeben sich aus deren nachfolgender Erläuterung anhand eines in der Figur gezeigten Ausführungsbeispiels.

Die Figur zeigt eine Blockdarstellung einer Telefonanlage gemäß der Erfindung. Die gezeigte Telefonanlage weist als zentrales Element eine Vermittlungsstelle V auf, die mit einer Steuereinheit Va versehen ist. Die Vermittlungsstelle ist drahtlos oder drahtgebunden an eine Vielzahl von Teilnehmern angeschlossen. Die Teilnehmer T1 bis T6 sind herkömmliche Telefone, die in verschiedenen Zimmern eines Wohnhauses aufgestellt sind. Jedes dieser Telefone kann - sofern eine Amtsleitung A1, A2 frei ist - über die Vermittlungsstelle mit der jeweiligen Amtsleitung verbunden werden, um ausgehende Telefongespräche zu führen oder eingehende Telefonate entgegenzunehmen.

Ein weiterer an die Vermittlungsstelle V angeschlossener Teilnehmer ist eine Settop-Box STB, in welche ein Modem integriert ist. Ferner ist ein Teilnehmer TV vorgesehen, bei dem es sich um einen Fernsehempfänger mit integriertem Modem handelt.

Die in die Settop-Box STB und in das Fernsehgerät TV integrierten Modems können beispielsweise dazu verwendet werden, im Internet zu surfen, oder dazu, im Zusammenhang mit Einkaufsfernsehen einen Rückkanal zu realisieren.

Sind die beiden Amtsleitungen A1 und A2 längere Zeit belegt, beispielsweise dadurch, dass mittels des Fernsehgerätes bzw. dessen Modem eine Verbindung zum Internet hergestellt ist und weiterhin einer der anderen Teilnehmer die andere Amtsleitung längere Zeit belegt, dann stehen für die weiteren Teilnehmer keine Amtsleitungen mehr zur Verfügung.

Gemäß der vorliegenden Erfindung erfolgt in einem derartigen Fall ein Aufbau einer Amtsverbindung über ein Handy, welches mit der Vermittlungsstelle V in Verbindung steht.

Beispielsweise sind - wie es aus der Figur hervorgeht - zwei Handys D1 und D2 vorgesehen. Das Handy D1 weist eine Steuereinheit D1a und das Handy D2 eine Steuereinheit D2a auf, wobei die Steuereinheiten der Handys mit der zur Kommunikation mit der Vermittlungsstelle notwendigen Software ausgestattet sind. Mittels des Handys D1 kann eine drahtlose Amtsverbindung A3 und mittels des Handys D2 eine drahtlose Amtsverbindung A4 aufgebaut werden.

Die Verbindung zwischen den Handys und der Vermittlungsstelle kann drahtlos oder drahtgebunden sein. Diese Verbindung zwischen der Vermittlungsstelle und den Handys kann auch dadurch bewerkstelligt werden, dass die Vermittlungsstelle mit der Ladestation des jeweiligen Handys drahtlos oder drahtgebunden verbunden ist und diese Verbindung nur dann aktiviert ist, wenn das Handy in die zugehörige Ladestation eingesetzt ist.

Der Aufbau einer drahtlosen Amtsverbindung A3 bzw. A4 geschieht bei belegten Amtsleitungen A1 und A2 wie folgt:

Von einem der Teilnehmer, beispielsweise vom Teilnehmer T1 wird der Vermittlungsstelle ein Anforderungssignal für eine Amtsverbindung zugeführt. Die Vermittlungsstelle überprüft zunächst, ob eine der beiden Amtsleitungen A1 oder A2 verfügbar ist oder nicht. Ist dies der Fall, dann wird der Teilnehmer T1 mit der freien Amtsleitung A1 bzw. A2 verbunden. Ist keine der genannten Amtsleitungen frei, dann überprüft die Vermittlungsstelle V, ob eine der beiden drahtlosen Amtsverbindungen A3 oder A4 zur Verfügung steht. Dies geschieht durch die Aussendung eines Anfragesignals an die Steuereinheit D1a, D2a des jeweiligen Handys, welche der Vermittlungsstelle V ein entsprechendes Antwortsignal zurücksendet.

Steht eine der drahtlosen Amtsverbindungen A3 oder A4 zur Verfügung, dann übermittelt die Vermittlungsstelle V an den anfragenden Teilnehmer T1 ein Anzeigesignal, welches Auskunft über die Möglichkeit der Herstellung einer drahtlosen Amtsverbindung enthält. Der Teilnehmer kann dann die freie drahtlose Amtsverbindung in Anspruch nehmen oder dieses Angebot abzulehnen. Möchte er die freie Amtsverbindung in Anspruch nehmen, dann übermittelt er der Vermittlungsstelle V ein Bestätigungssignal. Die Vermittlungsstelle gibt aufgrund dieses Bestätigungssignals der Steuereinheit des jeweiligen Handys ein Freigabesignal. Die Steuereinheit des Handys baut daraufhin die gewünschte Amtsverbindung auf, so dass der anfragende Teilnehmer über die drahtlose Amtsverbindung A3 bzw. A4 telefonieren kann.

Bei der dargestellten Telefonanlage können auch über eine der drahtlosen Amtsverbindungen eingehende Telefonate an die Teilnehmer weitergegeben werden. Vorzugsweise ist die Steuereinheit Va der Vermittlungsstelle V derart programmierbar oder programmiert, dass bestimmte Teilnehmer zum Aufbau einer drahtlosen Amtsverbindung freigeschaltet sind, beispielsweise die Teilnehmer T1 - T6, bei denen es sich um herkömmliche Telefone handelt. Geht über eine der drahtlosen Amtsverbindungen A3 oder A4 ein Telefongespräch ein, dann wird dieses über die Verbindung zwischen dem Handy und der Vermittlungsstelle an diese weitergeleitet und von der Vermittlungsstelle aus an die freigeschalteten Teilnehmer T1 - T6 weitergegeben. Alle diese Teilnehmer generieren dann ein akustisches oder optisches Anzeigesignal, welche den über die drahtlose Amtsverbindung A3 bzw. A4 eingegangenen Anruf signalisiert. Vorzugsweise erfolgt diese Signalisierung derart, dass sie sich von der Signalisierung bei Telefongesprächen, die über die Amtsleitungen A1 oder A2 eingehen, unterscheidet, so dass der Benutzer erkennt, ob der jeweils ankommende Anruf über eine Amtsleitung oder über eine der drahtlosen Amtsverbindungen eingegangen ist.

Nach alledem werden bei der vorliegenden Erfindung unter Verwendung von einem oder mehreren Handys, die in vielen Haushalten ohnehin vorhanden sind, eine oder mehrere zusätzliche Amtsverbindungen bereitgestellt. Zu diesem Zweck sind die Handys oder deren Ladestationen mit einer im Haushalt vorhandenen Vermittlungsstelle verbunden, die die entsprechenden Signalisierungen, Signalumschaltungen, Signalweiterleitungen, etc., steuert.

Die Steuereinheit Va der Vermittlungstelle V kann bereits vom Gerätehersteller vorprogrammiert sein. Alternativ dazu kann die Programmierung der Steuereinheit Va auch erst am Aufstellungsort des Gerätes bzw. der Anlage unter Verwendung einer Bedieneinheit und/oder eines Datenträgers vorgenommen oder am Aufstellungsort ergänzt werden. Weiterhin kann die Programmierung der Steuereinheit Va auch online über eine Telefonverbindung erfolgen. Eine bereits erfolgte Programmierung der Steuereinheit Va kann bei Bedarf verändert werden, beispielsweise beim Hinzukommen oder Wegfallen eines der Teilnehmer.

### Bezugszeichenliste:

- A1: Erste Amtsverbindung
- A2: Zweite Amtsverbindung
- A3: Dritte Amtsverbindung
- A4: Vierte Amtsverbindung
- D1: Erstes Handy
- D1a: Steuereinheit des ersten Handys
- D2: Zweites Handy
- D2a: Steuereinheit des zweiten Handys
- STB: Settop-Box
- T1: Erster Teilnehmer
- T2: Zweiter Teilnehmer
- T3: Dritter Teilnehmer
- T4: Vierter Teilnehmer
- T5: Fünfter Teilnehmer
- T6: Sechster Teilnehmer
- TV: Fernsehgerät
- V: Vermittlungsstelle
- Va: Steuereinheit der Vermittlungsstelle

## Patentansprüche

1. Telefonanlage, welche aufweist:
- eine Vermittlungsstelle (V),
- mehrere mit der Vermittlungsstelle (V) verbundene Teilnehmer (T1 ...T6; TV; STB),
- eine oder mehrere mit der Vermittlungsstelle (V) verbundene Amtsleitungen (A1, A2), wobei
- die Vermittlungsstelle (V) weiterhin mit einem Handy (D1, D2) oder einem Handyladegerät verbunden ist und
- die Vermittlungsstelle (V) dazu vorgesehen ist, über das Handy (D1, D2) eine drahtlose Amtsverbindung (A3, A4) für einen der Teilnehmer (T1 ... T6; TV; STB) herzustellen,
**dadurch gekennzeichnet, dass**
die Vermittlungsstelle (V) eine programmierbare oder programmierte Steuereinheit (Va) aufweist und die Steuereinheit (Va) derart programmierbar oder programmiert ist, dass sie bei Belegung der vorhandenen Amtsleitungen (A1, A2) beim Vorliegen eines Anforderungssignals für eine Amtsverbindung (A1, A2) seitens eines der Teilnehmer (T1 ... T6; TV; STB) die Herstellung einer Amtsverbindung (A3, A4) über das Handy (D1, D2) in die Wege leitet und die Steuereinheit (Va) derart programmierbar oder programmiert ist, dass sie vor der Herstellung der Amtsverbindung (A3, A4) dem das Anforderungssignal aussendende Teilnehmer (T1 ...T6; TV; STB) ein Anzeigesignal übermittelt, welches Auskunft über die Möglichkeit der Herstellung einer drahtlosen Amtsverbindung (A3, A4) enthält und dem Handy (D1, D2) ein Freigabesignal zur Herstellung einer drahtlosen Amtsverbindung nur dann übermittelt, wenn ein Bestätigungssignal seitens des Teilnehmers (T1 ...T6; TV; STB) vorliegt.

2. Telefonanlage nach Anspruch 1,
**dadurch gekennzeichnet, dass**
die Vermittlungsstelle (V) mit mehreren Handys (D1, D2) oder Handyladegeräten verbunden ist oder die Vermittlungsstelle (V) mit dem oder den Handys (D1, D2) oder den Handyladegeräten drahtlos verbunden ist oder die Vermittlungsstelle (V) mit dem oder den Handys (D1, D2) oder den Handyladegeräten jeweils über eine Leitung verbunden ist.

3. Telefonanlage nach einem der Ansprüche 1 oder 2,
**dadurch gekennzeichnet, dass**
die Vermittlungsstelle (V) mit den Teilnehmern (T1 ...T6; TV; STB) jeweils drahtlos verbunden ist.

4. Telefonanlage nach einem der Ansprüche 1 oder 2,
**dadurch gekennzeichnet, dass**
die Vermittlungsstelle (V) mit den Teilnehmern (T1 ...T6; TV; STB) jeweils über eine Leitung verbunden ist.

5. Telefonanlage nach einem der Ansprüche 1 bis 4,
**dadurch gekennzeichnet, dass**
ein Teilnehmer (T1 ...T6; TV; STB) eine mit einem Modem ausgestattete Set-Top-Box (STB) ist.

6. Telefonanlage nach einem der Ansprüche 1 bis 4,
**dadurch gekennzeichnet, dass**
ein Teilnehmer (T1 ...T6; TV; STB) ein mit einem Modem ausgestatteter Fernsehempfänger (TV) ist.

7. Telefonanlage nach Anspruch 1,
**dadurch gekennzeichnet, dass**
die Steuereinheit (Va) derart programmierbar oder programmiert ist, dass sie beim Eingehen eines Anrufs über das Handy (D1, D2) einen oder mehreren der an die Vermittlungsstelle (V) angeschlossenen Teilnehmern (T1 ... T6; TV; STB) das Eingehen des genannten Anrufs signalisiert und der oder die Teilnehmer (T1 ...T6; TV; STB) ein akustisches oder optisches Meldesignal ausgeben.

8. Telefonanlage nach Anspruch 7,
**dadurch gekennzeichnet, dass**
das von dem oder den Teilnehmern (T1 ... T6; TV; STB) ausgegebene Meldesignal von dem Meldesignal unterschiedlich ist, welches die Teilnehmer (T1 ...T6; TV; STB) beim Eingehen eines Anrufs über eine der Amtsleitungen (A1, A2) ausgeben.

9. Telefonanlage nach einem der Ansprüche 1, 7 oder 8,
**dadurch gekennzeichnet, dass**
die an die Vermittlungsstelle (V) angeschlossenen Teilnehmer (T1 ...T6; TV; STB) jeweils zum Aufbau einer drahtlosen Amtsverbindung (A3; A4) freigebbar und sperrbar sind.

## Claims

1. Telephone installation, having:
- an exchange (V),
- several subscribers (T1...T6; TV; STB) connected to the exchange (V),
- one or more exchange lines (A1, A2) connected to the exchange (V), wherein
- the exchange (V) is furthermore connected to a mobile telephone (D1, D2) or a mobile telephone charging device, and
- the exchange (V) is provided for producing a wireless telephone connection (A3, A4) for one of the subscribers (T1...T6; TV; STB) via the mobile telephone (D1, D2),
**characterised in that**,
the exchange (V) has a programmable or programmed control unit (Va) and the control unit (Va) can be or is programmed in such a way that it engineers the production of a telephone connection (A3, A4) via the mobile telephone (D1, D2) when the existing exchange lines (A1, A2) are occupied in the presence of a request signal for a telephone connection (A1, A2) on the part of one of the subscribers (T1...T6; TV; STB), and the control unit (Va) can be or is programmed in such a way that it transmits a display signal to the subscriber (T1...T6; TV; STB) that is emitting the request signal before the production of the telephone connection (A3, A4), said display signal containing information about the possibility of the production of a wireless telephone connection (A3, A4) and then only transmitting an enabling signal for the production of a wireless telephone connection to the mobile telephone (D1, D2) when a confirmation signal is available to the subscriber (T1...T6; TV; STB).

2. Telephone installation according to claim 1,
**characterised in that**,
the exchange (V) is connected to several mobile telephones (D1, D2) or mobile telephone charging devices or the exchange (V) is wirelessly connected to the mobile telephone(s) (D1, D2) or the mobile telephone charging devices or the exchange (V) is connected to the mobile telephone(s) (D1, D2) or the mobile telephone charging devices via a respective cable.

3. Telephone installation according to claim 1 or 2,
**characterised in that**,
the exchange (V) is connected wirelessly to the respective subscribers (T1...T6; TV; STB).

4. Telephone installation according to claim 1 or 2,
**characterised in that**,
the exchange (V) is connected to the respective subscribers (T1...T6; TV; STB) via a cable.

5. Telephone installation according to one of claims 1 to 4,
**characterised in that**,
a subscriber (T1...T6; TV; STB) is a set top box (STB) that is equipped with a modem.

6. Telephone installation according to one of claims 1 to 4,
**characterised in that**,
a subscriber (T1...T6; TV; STB) is a television receiver (TV) that is equipped with a modem.

7. Telephone installation according to claim 1,
**characterised in that**,
the control unit (Va) can be or is programmed in such a way that, when a call is received by the mobile telephone (D1, D2), it signals that said call has been received to one or more of the subscribers (T1...T6; TV; STB) connected to the exchange (V) and the subscriber(s) (T1...T6; TV; STB) emit(s) an acoustic or optical status signal.

8. Telephone installation according to claim 7,
**characterised in that**,
the status signal emitted by the subscriber(s) (T1...T6; TV; STB) is different from the status signal that is emitted by the subscribers (T1...T6; TV; STB) when a call is received via one of the exchange lines (A1, A2).

9. Telephone installation according to one of claims 1, 7 or 8,
**characterised in that**,
the subscribers (T1...T6; TV; STB) connected to the exchange (V) can each be released and locked to create a wireless telephone connection (A3, A4).

## Revendications

1. Installation téléphonique, qui comporte :
- un standard téléphonique (V),
- plusieurs postes d'abonnés (T1 ... T6 ; TV ; STB) reliés au standard téléphonique (V),
- une ou plusieurs lignes réseau (A1, A2) reliées au standard téléphonique (V),
- ledit standard téléphonique (V) étant relié, en outre, à un téléphone mobile (D1, D2) ou à un chargeur de téléphone mobile, et
- le standard téléphonique (V) étant prévu pour établir, via le téléphone mobile (D1, D2), une communication téléphonique (A3, A4) sans fil pour l'un des postes d'abonnés (T1 ... T6 ; TV ; STB),
**caractérisée en ce que**
le standard téléphonique (V) comporte une unité de commande (Va) programmable ou programmée, et ladite unité de commande (Va) peut être programmée ou est programmée de telle sorte que, en cas d'occupation des lignes réseau (A1, A2), elle lance l'établissement d'une communication téléphonique (A3, A4) via le téléphone mobile (D1, D2) en présence d'un signal de demande pour une communication téléphonique (A3, A4) de la part de l'un des postes d'abonnés (T1 ... T6 ; TV ; STB), et l'unité de commande (Va) peut être programmée ou est programmée de telle sorte que, avant l'établissement de la communication téléphonique (A3, A4), elle transmet au poste d'abonné (T1 ... T6 ; TV ; STB), qui émet le signal de demande, un signal d'annonce qui contient une information sur la possibilité d'établissement d'une communication téléphonique (A3, A4) sans fil et transmet au téléphone mobile (D1, D2) un signal de déblocage pour l'établissement d'une communication téléphonique sans fil à la seule condition qu'un signal de confirmation ait été donné par le poste d'abonné (T1 ... T6 ; TV ; STB).

2. Installation téléphonique selon la revendication 1, **caractérisée en ce que** le standard téléphonique (V) est relié à plusieurs téléphones mobiles (D1, D2) ou chargeurs de téléphones mobiles, ou le standard téléphonique (V) est relié sans fil au ou aux postes d'abonnés (T1 ... T6 ; TV ; STB) ou aux chargeurs de téléphones mobiles, ou le standard téléphonique (V) est relié via une ligne dans chaque cas au ou aux téléphones mobiles (D1, D2) ou aux chargeurs de téléphones mobiles.

3. Installation téléphonique selon la revendication 1 ou 2, **caractérisée en ce que** le standard téléphonique (V) est relié sans fil à chacun des postes d'abonnés (T1 ... T6 ; TV ; STB).

4. Installation téléphonique selon la revendication 1 ou 2, **caractérisée en ce que** le standard téléphonique (V) est relié via une ligne à chacun des postes d'abonnés (T1 ... T6 ; TV ; STB).

5. Installation téléphonique selon l'une quelconque des revendications 1 à 4, **caractérisée en ce qu'**un poste d'abonné (T1 ... T6 ; TV ; STB) est un boîtier décodeur (STB) équipé d'un modem.

6. Installation téléphonique selon l'une quelconque des revendications 1 à 4, **caractérisée en ce qu'**un poste d'abonné (T1 ... T6 ; TV ; STB) est un récepteur de télévision (TV) équipé d'un modem.

7. Installation téléphonique selon la revendication 1, **caractérisée en ce que** l'unité de commande (Va) peut être programmée ou est programmée de telle sorte qu'à la réception d'un appel via le téléphone mobile (D1, D2), elle signale à un ou plusieurs postes d'abonnés (T1 ... T6 ; TV ; STB) raccordés au standard téléphonique (V) la réception dudit appel, et le ou les postes d'abonnés (T1 ... T6 ; TV ; STB) émettent un signal d'avertissement acoustique ou optique.

8. Installation téléphonique selon la revendication 7, **caractérisée en ce que** le signal d'avertissement émis par le ou les postes d'abonnés (T1 ... T6 ; TV ; STB) est différent du signal d'avertissement que les postes d'abonnés (T1 ... T6 ; TV ; STB) délivrent lors de la réception d'un appel via l'une des lignes réseau (A1, A2).

9. Installation téléphonique selon la revendication 1, 7 ou 8, **caractérisée en ce que** les postes d'abonnés (T1 ... T6 ; TV ; STB) raccordés au standard téléphonique (V) peuvent être débloqués et verrouillés dans chaque cas pour l'établissement d'une communication téléphonique (A3, A4) sans fil.
